# EUROPEAN PATENT APPLICATION

(11) **EP 1 596 598 A2**
(43) Date of publication of application: **16.11.2005**
(21) Application number: 05003372.9
(22) Date of filing: 17.02.2005
(51) Int. Cl.: H04N 7/16, H04N 5/00, H04L 12/28

(54) **System for the transmission and reception of radio or television data**

(30) Priority: 23.02.2004 PL 36551504
(71) Applicant: Advanced Digital Broadcast Polska Sp. zo.o., 65-119 Zielona Gora (PL); Advanced Digital Broadcast Ltd., Hsin-Tien City Taipei County 231 (TW)
(72) Inventor: Dabrowa, Andrzej, 65-012 Zielona Gora (PL); Lazarski, Wojciech, 65-012 Zielona Gora (PL)
(74) Representative: Hudy, Ludwik

(57) **Abstract**

In a system of transmission and reception of radio or television data with a head-end part transmitting data via two channels and receivers of radio or television data having identifiers, the head-end part comprises an interface for transmitting audio/video data and an access rights control block having an interface for transmitting services information (SI), programming package contents and identifiers of the receivers' packages. In turn, the receivers comprise an execution block, which controls access of the receivers to specific channels or programs on the basis of the content of the programming package corresponding to the package identifier of a given receiver.

## Description

The present invention relates to a system of transmission and reception of radio or television data, a receiver of radio or television programs, a system for control of access rights and a method of transmission and reception of radio or television data.

The development of digital television allows for greater compatibility with the requirements of the growing number of users. Given the variety of users and their interests, besides broadcast programmes, information about the programmes is necessary in order, on the one hand, to allow potential clients to take advantage of the offer and on the other hand to allow control of the broadcast programs, as directed to specific users.

From the patent specification US 6,425,133 entitled *"Method for configuring cable television converter terminals using multiple channels and arrangement therefor*", there is a known method for configuring a cable television converter terminal using many channels. In this system configuration data is sent via an additional transmission channel (Out-of-band channel). The configuration contains executable commands for the converter, whereas the first configuration, sent via the additional channel, contains commands performing redirection to the reception of data from the main channel (In-band channel). Additional configuration data is sent via the main transmission channel, wherein the data consists of commands executed by the converter and the main transmission channel has a greater bandwidth than the additional transmission channel. Configuration data from both transmission channels contains commands executed by the converter.

American patent application No. US 20030021250A1 entitled "*Blue tooth out-of-band management and traffic monitoring for wireless access points",* presents a method for the management of a primary wireless transmission channel using a second wireless transmission channel. The protocol, the use of which enables the data transmission to be managed is Bluetooth and the main band is managed by the Bluetooth transmission if a wireless transmission is in accordance with the 802.11 standard. In the method according to the invention the additional band is not used to manage data transmission in the main band. The additional band transmits supplementary data to the main band data.

Yet another solution is presented in American patent application No. US 20030014546A1 entitled *"Method and system for enabling visitors to subscribe to currently-viewed programming packages*". The application presents a method, according to which, a person, paying a visit to someone who uses the programming offer of the same operator, may exchange their own programming package for the package available at the receiver, which is being used during the visit. The method requires inputting a personal identifier, which will allow the operator to recognize the person. Additionally the number of the programming package, chosen by the person, is sent.

In cable television networks systems used in the USA, television data is delivered to the viewers by means of two transmission channels. Audio/video data, for example in MPEG format, are transmitted via the first channel. The data need not have the required description for its proper processing. Via the second channel, for example, managed by a modem compatible with the DOCSIS (*Data-Over-Cable Service Interface Specifications)* specification, there is sent the description of the data delivered via the first channel and supplementary data such as services information (SI) according to, for example, DVB standard. Thanks to such a division the receivers need not be equipped with access verification systems (conditional access).

The drawback of the systems described is that end filters are installed on the receivers which allow for reception of only a part of the first channel band, by means of which audio/video data are broadcast. Specific parts of the band correspond to programming packages made available by the operator and change of a programming package by the user requires the exchange of the filter, which necessitates direct contact with sales office personnel or a service facility.

The aim of the invention is to create a system of transmission and reception of radio or television data that sends, besides broadcast programs, information about the programs in order to allow potential clients to take advantage of the offer and to allow control of programs sent to clients subscribing for reception of these programs.

The essence of the invention is that in a system of transmission and reception of radio or television data by users subscribing for reception of radio or television data, comprising a head-end part transmitting data via two channels and receivers of radio or television data having identifiers, the head-end part comprises an interface for transmitting, via the first channel, audio/video data and an access rights control block, comprising an interface for transmitting, via the second channel, services information (SI), programming package contents and identifiers of the receivers' packages while the receivers comprise the execution block, which controls access of the receivers to specific channels or programmes on the basis of the content of the programming package corresponding to the package identifier of a given receiver.

The first transmission channel can form the main channel (in-band) of the transmission and the second transmission channel is an additional transmission channel (out-of-band).

The second transmission channel can be used as a transmission channel in the DOCSIS standard, the receivers contain a DOCSIS modem, and the interface transmits data in the DOCSIS standard.

The access rights control block may consist of a programming packages server, which stores database of services information (SI) and the contents of the programming packages.

Preferably the programming packages server is a HTTP server and transmits data to the interface via IP network and transmits in the group transmission system or in other words multicast, information about the current version of the database of services information (SI) and the contents of the programming packages.

The access rights control block may consist of a configuration server, which stores information about the identifiers of the packages of individual receivers and which is a TFTP server.

The configuration server can store or generate at request, the configuration files of the receivers, which contain information about the programming package of a given receiver, the address of the database of programming packages and the multicast address, to which information about the current version of the database of services information (SI) and contents of the programming packages is sent.

The data receivers can also contain an additional block of access rights analysis, which determines whether a given channel or programme can be displayed, a configuration changes monitoring block, which provides new services information (SI) or programming package contents, a memory for storing data concerning access rights and a modem communication block allowing for the exchange of data concerning access rights.

A receiver of radio or television programmes having typical modules and with internal or externally connected modem and having an identifier contains an execution block, which controls access by the receiver to specific channels or programmes received by the modem on the basis of the content of the programming package, and access by the receiver to a specific channel or programme is possible if the given channel or programme is part of the package of the receiver.

Preferably the modem is a DOCSIS modem and is externally connected via a USB interface.

A block for access rights control can consist of an interface for transmitting, via an additional transmission channel, services information (SI), contents of the programming packages and identifiers of receivers' packages meant for reception in receivers via an execution block, which controls the access of receivers to specific channels of programs on the basis of the content of the programming package connected with the package identifier of a particular receiver.

The block for access rights control may be a server of programming packages, which stores a database of services information (SI) and the contents of programming packages.

The concept of the invention also includes the principle that in the method for transmission and reception of radio or television data, in which data, transmitted by the head-end part, by means of at least two transmission channels, to users subscribing to the reception of radio or television data, and received in receivers with an internal or externally connected modem and having identifiers in the head-end part transmits, via the first channel, audio/video data and, via the second channel, services information (SI), on the contents of the programming packages and the identifiers of the receivers' packages, whereas in the receivers the access to specific channels or programmes is controlled, on the basis of the content of the programming package connected with the package identifier of a given receiver.

Preferably the connection of the receivers with the head-end is performed by means of a DOCSIS modem and the receiver, after being switched on, sets itself to a channel or programme selected for display and retrieves data consisting of programs and their description from the primary transmission channel. Next it is checked to ascertain whether data defining access rights is stored in the receiver's memory and this is retrieved from the head-end via the second transmission channel. If such data is not present in the receiver or when the services information (SI) database version has changed, the next checks ascertain whether the receiver can display the selected channel or programme and if it can display it, whether the receiver and the DOCSIS modem have access to the DOCSIS signal. If the receiver has access to that signal, the selected channel or programme will then be displayed.

The communication of a receiver with the head-end can be achieved using a DOCSIS modem and after the DOCSIS modem is switched on, via the second transmission channel, the modem configuration is retrieved from the head-end by means of the modem. In the case that during configuration an MIB object has been retrieved with additional configuration parameters, a filter is set, according to parameters defined by MIB, for group transmission packets (or in other words multicast) and next, access rights are retrieved, which are stored in receiver's memory. Next information about the version of access rights configuration is monitored, the information being sent using the multicast method.

Communication with the head-end can be also performed by means of a DOCSIS modem and in order to control access of a receiver to specific channels or programmes, an analysis of audio/video data is executed This is made available using the first transmission channel, services information and contents of the programming packages being received via an additional transmission channel. Next the receiver's identifier is retrieved from the memory and on the basis of this data a list of channels or programmes available to the receiver is created and subsequently stored in the receiver's memory.

The solution according to the invention comprises elements which improve system safety and replace the ineffective technique of using band filters on channel via which audio/video data is broadcast. One of the elements is the introduction of receiver identification, for example by means of a MAC or IP address for the receiver and identification of the subscribed programming package. Another element is the programming packages server, for example an HTTP server, which allows for the transmission to recipients of information about which programmes form part of a given programming package. The information concerning receiver identification and the chosen programming package can be additionally ciphered in order to increase system security.

The invention will now be described by way of example and with reference to the accompanying drawings in which:

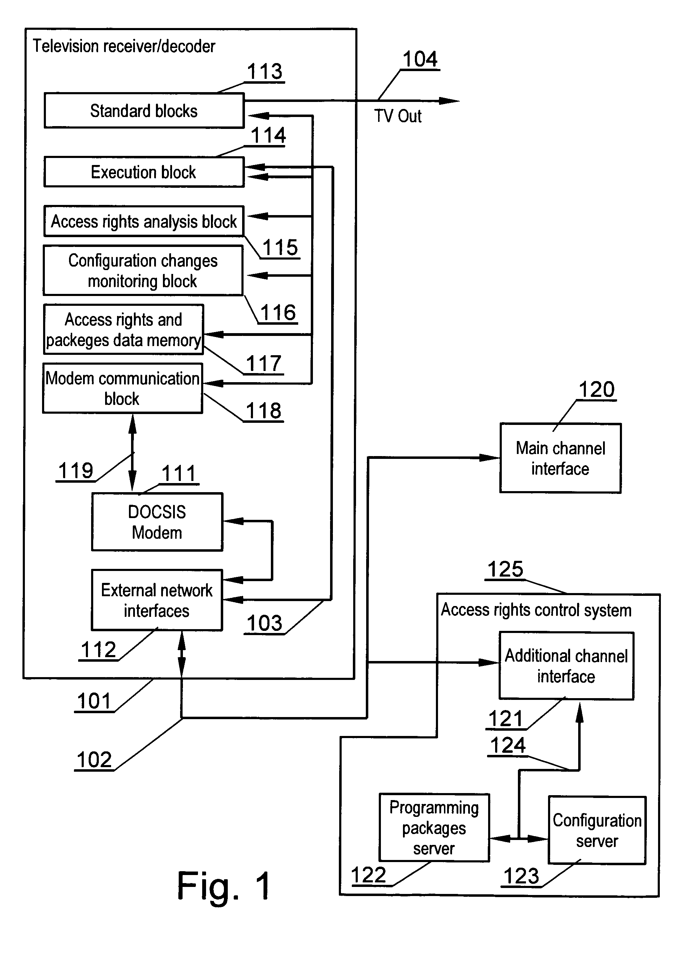

Fig. 1 shows a chart of the general system architecture;
Fig. 2 shows additional data stored in configuration files of receivers, stored in a configuration server;
Figs. 3A and 3B show a block diagram of a procedure of receiver start-up and operation;
Fig. 4 shows a block diagram of a procedure of DOCSIS modem start-up and operation; and
Fig. 5 shows a block diagram of a procedure for creating a list of channels available for receiver's user.

The system of transmission and reception of radio or television data is divided into two parts, transmitting (head-end) and receiving. The receiver, which for example can be a cable digital television decoder 101, comprises a common set of blocks 113 such as a processor, a MPEG decoder, an OSD block, memory circuits, circuits for converting video and audio to the parameters of the connected television receiver, or a remote control interface. Additionally, it contains an internal modem 111 operating according to the DOCSIS standard. The modem can also be connected as an external device for example via USB 119. In this arrangement the communication between the head-end and the receivers takes place in cable network 102, the communication being controlled in the receivers by interfaces 112. The blocks with reference numbers 111, 112, 113 are commonly used in receivers. The other blocks are innovatory and new.

An execution block 114, controls access of the receivers to specific channels or programmes on the basis of the programming package connected with the package identifier of a given receiver. The execution block 114 only allows for the reception of programs for which the user has subscribed. It is connected via line 103 to the external network interface 112. An analysis block 115 is responsible for the analysis of the access rights of the receiver to broadcast television programmes. The analysis block 115 defines whether a given channel or programme can be displayed. A block for monitoring 116 is responsible for monitoring changes in the configuration of programming packages and providing notification about such changes. Access rights data is stored in a memory 117 (for example as a separate area in the memory constituting one of the standard blocks 113). A communication block 118 is responsible for the communication of the other blocks with the modem 111. Access rights data is exchanged via this route. The receiver generates a television signal, which is passed to an output 104, for example to a television monitor connected to the receiver.

According to the television cable networks OpenCable, data can be sent to the receiver via two transmission channels. The first of them, the in-band channel, transmits audio/video data comprising PSI (*Program Specific Information*). According to this standard, the second channel is a DOCSIS channel, which is assigned an additional band (out-of-band). Audio/video data are transmitted via a main channel interface 120, which, for example, for cable television in the USA can be ATSC head-end. The next head-end element is the access rights control system 125. The system contains an additional channel interface 121, for example a CMTS *(Cable Modem Termination System).* Two servers, 122 and 123, are connected the additional channel interface 121. The first of them, a first server 122, is the programming packages server, for example HTTP, transmitting data for example via an IP network to the additional channel interface 121. The first server can transmit in the multicast system, which means group transmission to several receivers, information about the current version of service information (SI) database and contents of the programming packages and upon request by receivers it sends the databases to receivers. By this arrangement, the number of database retrievals sent to the receivers is reduced, because data needs to be retrieved again only if a change occurs in relation to the version stored in the receiver. The second server 123 is a configuration server, which stores receiver configuration files for a given digital cable television network. The server can operate as a TFTP server. The configuration file is retrieved by the receiver's modem at start-up. The configuration file comprises the identifier of the package which can be accessed by a given receiver.

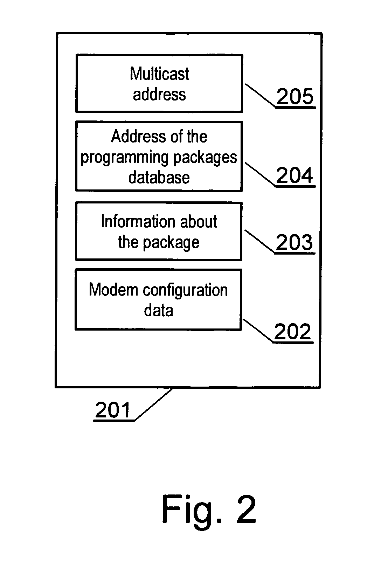

In Fig. 2 additional fields required in the configuration files of digital cable television receivers are shown. The files are stored on the configuration server. On the server MIB *(Management Information Base)* information is stored consisting of data specific for the receiver according to the invention. The configuration 201 contains fields 202 known from the prior art and three additional fields or parameters 203, 204, 205 belonging to the MIB unit, specific for the system according to the invention. The first additional configuration field 203, contains information about the television programming package which can be accessed by the receiver, which is the receiver's package identifier. The second filed 204, defines a programming package database address (for example the URL address of the first server 122), from which service information and the contents of the package defined by the field 203 can be retrieved. The last additional field 205 contains a multicast address, where information about the availability of updates of services information (SI) and the contents of programming packages will be transmitted.

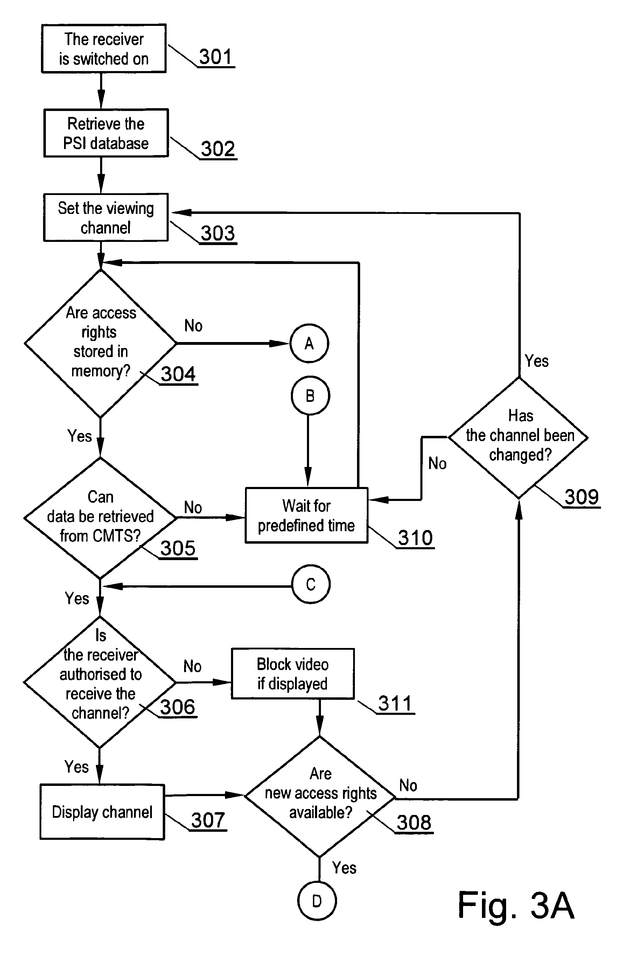

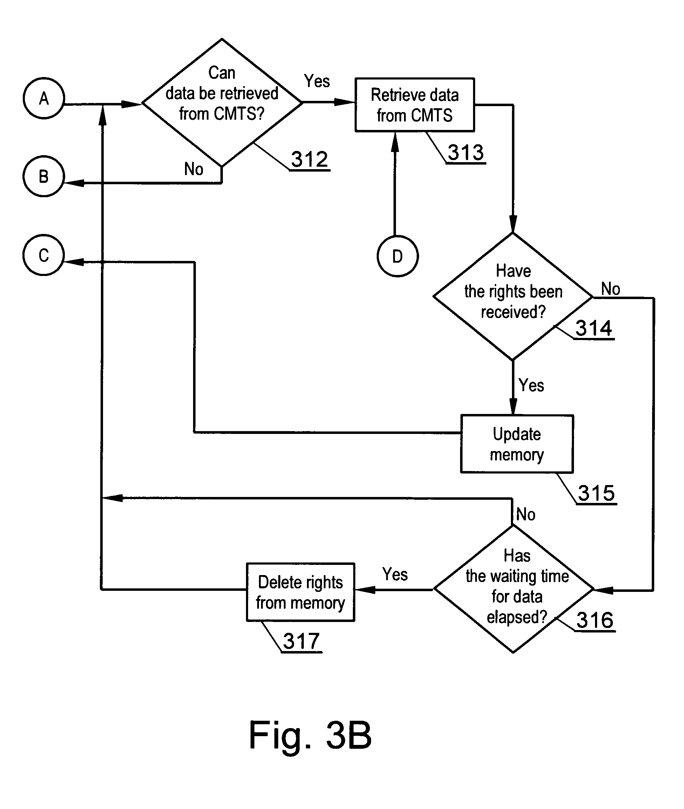

In Fig. 3A and Fig. 3B a procedure for a receiver's start-up and operation is shown. The procedure starts when the receiver is switched on in step 301. In step 302, audio/video data is received from the stream broadcast on the main channel (in-band). This data consists of programmes and their description, for example in the MPEG standard. The data might, for example, consist of PAT and PMT tables. Next, in step 303 of the procedure, the selected television channel is set. Then, in step 304 it is checked whether the data defining access rights are stored in the receiver's memory. Information about programmes and data defining access rights, that is services information (SI) and the contents of the programming packages are stored in the receiver in order to avoid frequent retrieval of the database from the transmitter. The database of services information and data defining access rights are retrieved if they are not present in the receiver or if the database version changes.

If the data defining access rights is stored in the receiver's memory, in step 305 it is checked to ascertain whether it can receive data from the CMTS. If not, the procedure reports the occurrence of an error and continues to step 310. If the check is positive the next is step 306, which verifies that the receiver is entitled to display the chosen channel. If access to given channel is not permitted, the procedure moves to step 311, where the receiver blocks the display of the audio/video signal of the selected channel if it has been displayed. Conversely, if the receiver has access rights, in step 307 of the procedure the selected channel is displayed because the receiver is certain that display of the selected channel is permissible and data has been received properly from both transmission channels.

From step 307 the procedure goes to a check in step 308 whether information about a new version of access rights has been received. If a new version has been received then the procedure moves to point D and on to step 313 in Fig. 3B. In the opposite case, the procedure moves to step 309, where it is checked whether the television channel has been changed in the receiver. If there has been no channel change then the procedure moves back to step 304. If the channel to be viewed has been changed, the procedure moves to step 303.

If the access rights are not stored in the receiver's memory, it most probably necessitates a first start-up for a given network. The procedure moves to point A in Fig. 3A and then to step 312 in Fig. 3B, where it is checked whether or not the receiver can receive data from the CMTS. If not, the procedure reports the occurrence of an error and moves to point B and further to step 310 in Fig. 3B. If the data is accessible, step 313 allows services information and contents of programming packages to be retrieved from the CMTS.

Next, in the step 314 of the procedure, receipt of access rights is checked. If yes, in step 315, the new version of access rights is stored in the receiver's memory and the program moves to point C and thence to step 306 of the procedure in Fig. 3A. If information about access rights has not been received then a move to step 316 is made, where it is checked whether the waiting time for data has elapsed. If yes, then in step 317 the access rights are deleted and the program progresses to step 312 of the procedure.

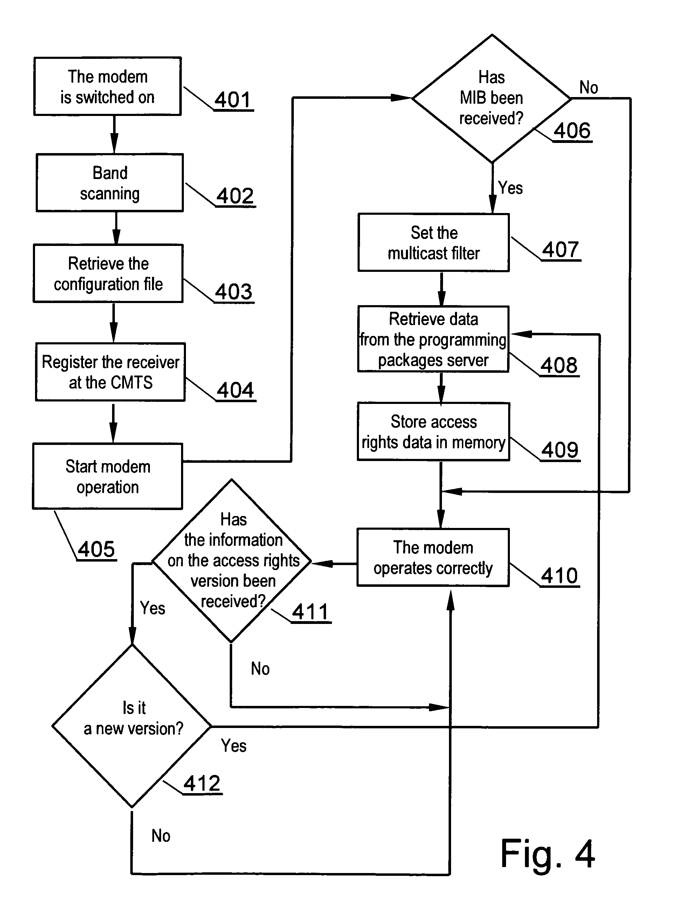

In Fig. 4 a procedure for the start-up and operation of the DOCSIS modem is shown. It starts at step 401, in which the modem is switched on. In step 402, band scanning for the channel takes place, in which data in the DOCSIS standard is transmitted. After the selected channel has been found, in step 403 of the procedure, the modem retrieves its configuration, shown in Fig. 2, from the second server 123. After the configuration has been received, in step 404 the modem performs authorization in the CMTS system by giving its identifier. After the execution of this operation, in step 405 the proper DOCSIS modem operation starts. In order to fully activate the DOCSIS modem, in step 406 of the procedure it is checked whether an MIB message, containing additional modem configuration parameters has been received from the second server 123. If the MIB message has not been received, the procedure moves to step 410. If the message has been received, in step 407 of the procedure, a filter, defined by MIB object parameters, is set for multicast packages. The next step 408 is to read services information and the contents of programming packages from the first server 122. Next, in step 409, the data, read in step 408, is stored in the receiver's memory. In step 410 the modem is set in normal operation mode and checks whether, in step 411, information about the access rights version, sent using the multicast method, has been received. In a case when the MIB message has not been received, the modem will be unable to receive information about the version of access rights configuration. If the modem receives information about the version of access rights configuration in step 411, then in step 412 of the procedure it is checked whether it is a new version of the configuration. If it is not a new version, the procedure moves to step 410. If there is a new version step 408 retrieves a new version of access rights configuration.

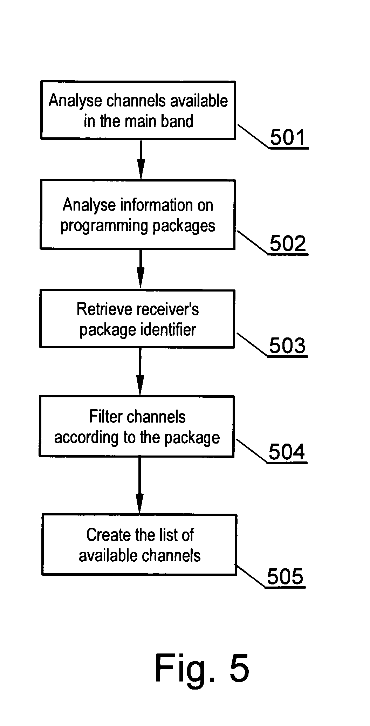

In Fig. 5 a procedure for creating a list of channels available for the receiver is shown. The procedure starts in step 501 from the analysis of the channels available in the main band, for example received via cable network from the ATSC transmitter. Next, in step 502 of the procedure, an analysis of services information and contents of programming packages, received via DOCSIS channel, takes place. Usually information received via the DOCSIS channel describes more channels than are physically available in the main band. The information can describe many streams of audio/video data from various sources. The next step 503 of the procedure is to retrieve from memory the package identifier, which has been sent by the second server 123. After retrieving this information, the receiver knows the identifier of its package, has the information about channels available and about which channels are included in the package of a given receiver. On the basis of this data, a channels list is filtered in step 504 of the procedure. The last step 505, of the procedure is to create a list of available channels and store it in the receiver's memory. In the case of any change of data analyzed in steps 501, 502 and 503, the procedure for the creation of a list of channels available for the receiver is run again.

The solution presented shows a system and method for the transmission of radio and television data, especially for receivers which do not have built-in access control modules. However application of the solution in a traditional system with an access control module is also possible. The system comprises two transmission paths. The first of them is a transmission channel, via which audio/video data are sent, for example in MPEG standard, without a description. The description of the received data is transmitted by means of a separate channel. Additionally via this channel, information identifying the receiver is sent. As a reply to this information, data is transmitted about the receiver's packet identifier. This concerns the programming package to which the user has subscribed. For a skilled operator it will be apparent that instead of the receiver's package identifier, a user identifier can be employed as assigned to a particular user of the system. By this means several users of the same receiver may have different packages. Additionally information is sent defining which radio and/or television programs or channels belong to the package purchased by the particular user. A programming package may consist of a set of channels and/or television programmes. Application of the system according to the invention facilitates the creation of new programming offers, i.e. new packages, and movement of channels or programmes between packages, a procedure which is difficult and time consuming if the filters used in earlier systems are present.

It is obvious, that instead of the presented exemplary DOCSIS system, a different out-of-band transmission system may be used.

## Claims

1. A system of transmission and reception of radio or television data by users, subscribing for reception of radio or television data, comprising a head-end part transmitting data via two transmission channels and receivers of radio or television data having identifiers, **characterized in that** the head-end part comprises an interface (120) for transmitting, via the first transmission channel, audio/video data and an access rights control block (125), comprising an interface (121) for transmitting, via the second transmission channel, services information (SI), programming packages contents and identifiers of receivers' packages while the receivers (101) comprise an execution block (114), which controls access of the receivers to specific channels or programs, on the basis of the content of the programming package corresponding to a package identifier of a given receiver.

2. The system according to claim 1, **characterized in that** the first transmission channel is an in-band channel.

3. The system according to claim 1, **characterized in that** the second transmission channel is an additional out-of-band channel.

4. The system according to claim 3, **characterized in that** the second transmission channel is a transmission channel in DOCSIS standard, the receivers (101) comprise a DOCSIS modem (111), and the interface (121) transmits data in the DOCSIS standard.

5. The system according to claim 1, **characterized in that** the access rights control block (125) comprises a programming packages server (122), which stores database of services information (SI) and contents of the programming packages.

6. The system according to claim 5, **characterized in that** the programming packages server (122) is a HTTP server and transmits data to the interface (121) via IP network.

7. The system according to claim 5, **characterized in that** the programming packages server (122) multicasts information about the current version of the database of services information (SI) and contents of the programming packages.

8. The system according to claim 1, **characterized in that** the access rights control block (125) comprises a configuration server (123), which stores information about identifiers of the packages of individual receivers.

9. The system according to claim 8, **characterized in that** the configuration server (123) is a TFTP server.

10. The system according to claim 8, **characterized in that** the configuration server (123) stores or generates at request, configuration files of the receivers (101), which comprise information about the programming package of a given receiver, address of the database of programming packages and the multicast address, to which information about the current version of the database of services information (SI) and contents of the programming packages is sent.

11. The system according to claim 1, **characterized in that** the receivers (101) comprise an additional block of access rights analysis (115), which determines whether given channel or program can be displayed.

12. The system according to claim 1, **characterized in that** the receivers (101) additionally comprise a configuration changes monitoring block (116), which notifies of new services information (SI) or programming packages contents.

13. The system according to claim 1, **characterized in that** the receivers (101) additionally comprise a memory for storing data concerning access rights (117).

14. The system according to claim 1, **characterized in that** the receivers (101) additionally comprise a modem (111) communication block (118) allowing for exchange of access rights data.

15. A receiver of radio or television programs having typical modules and an internal or externally connected modem and having an identifier, **characterized in that** it comprises an execution block (114), which controls access of the receiver to specific channels or programs on the basis of the content of the programming package, received by the modem (111), and the access of the receiver to specific channel or program is allowed if the given channel or program belongs to the package of the receiver.

16. The receiver according to claim 15, **characterized in that** the receiver additionally comprises access rights analysis block (115), which determines whether a given channel or program can be displayed.

17. The receiver according to claim 15, **characterized in that** the receiver additionally comprises a configuration changes monitoring block (116), which notifies of new services information (SI) or programming packages contents.

18. The receiver according to claim 15, **characterized in that** the receiver additionally comprises a memory for storing data concerning access rights (117).

19. The receiver according to claim 15, **characterized in that** the receiver additionally comprises a modem (111) communication block (118) allowing for exchange of data concerning access rights.

20. A device for access rights control **characterized in that** the device comprises an interface (121) for transmitting, via an additional transmission channel, services information (SI), contents of the programming packages and identifiers of receivers' packages meant for reception in receivers comprising an execution block (114), which controls access of receivers to specific channels of programs on the basis of the content of the programming package corresponding to the package identifier of a given receiver.

21. The device for access rights control according to claim 20, **characterized in that** the device comprises a server (122) of programming packages, which stores database of services information (SI) and contents of programming packages.

22. The device for access rights control according to claim 21, **characterized in that** the server (122) of programming packages is a HTTP server and transmits data to the interface (121) via IP network.

23. The device for access rights control according to claim 21, **characterized in that** the server (122) of programming packages multicasts, information about the current version of the database of services information (SI) and contents of the programming packages.

24. The device for access rights control according to claim 23, **characterized in that** it comprises configuration server (123), which stores information about identifiers of the packages of individual receivers.

25. A method for transmission and reception of radio or television data, in which data is transmitted by the head-end part, by means of at least two transmission channels, to the users subscribing to reception of radio or television data, and received in receivers comprising internal or externally connected modem and having identifiers, **characterized in that** in the head-end part transmits, via the first transmission channel, audio/video data and, via the second transmission channel, services information (SI), information on contents of the programming packages and identifiers of receivers' packages, whereas in the receivers the access to specific channels or programs is controlled, on the basis of the content of the programming package corresponding to the package identifier of a given receiver.

26. The method for transmission and reception of data according to claim 25, **characterized in that** the communication of the receivers with the head-end is performed by means of a DOCSIS modem and the receiver after being switched on sets itself to a channel or program selected for displaying and retrieves data comprising programs and their description from the first transmission channel and next it is checked whether data defining access rights are stored in the receiver's memory and they are retrieved from the head-end via the second transmission channel in case they are not present in the receiver or when services information (SI) database version has changed, next it is checked whether the receiver can display the selected channel or program and if it can display it, it is checked whether the receiver and the DOCSIS modem have access to the DOCSIS signal and if the receiver has access to that signal, the selected channel or program is displayed.

27. The method for transmission and reception of data according to claim 25, **characterized in that** the communication of a receiver with the head-end is performed by means of a DOCSIS modem and after the DOCSIS modem is switched on, via the second transmission channel, modem configuration is retrieved from head-end by means of the modem and in case when in the configuration an MIB object has been retrieved with additional configuration parameters, a filter is set, according to parameters defined by MIB, for group transmission packets or in other words multicast and next, access rights are retrieved, which are stored in receiver's memory and next information about version of access rights configuration is monitored, the information being sent using multicast method.

28. The method for transmission and reception of data according to claim 25, **characterized in that** the communication with the head-end is performed by means of a DOCSIS modem and in order to control access of a receiver to specific channels or programs, an analysis is executed of audio/video data, available in the first transmission channel, services information and contents of the programming packages received via an additional transmission channel, and next the receiver's identifier is retrieved from the memory and on the basis of these data a list of channels or programs available for the receiver is created and after its creation it is stored in the receiver's memory.
